# EUROPÄISCHE PATENTSCHRIFT

(11) **EP 4 254 063 B1**
(45) Veröffentlichungstag und Bekanntmachung des Hinweises auf die Patenterteilung: **15.05.2024**
(21) Anmeldenummer: 22165310.8
(22) Anmeldetag: 30.03.2022
(51) Int. Cl.: G03B 13/04, G02B 27/10, G06K 7/10

(54) **OPTOELEKTRONISCHER SENSOR MIT EINER ZIELEINRICHTUNG UND VERFAHREN ZUM VISUALISIEREN EINES SICHTFELDES**
OPTOELECTRONIC SENSOR WITH AIMING DEVICE AND METHOD FOR VISUALIZING A FIELD OF VIEW
CAPTEUR OPTOÉLECTRONIQUE DOTÉ D'UN DISPOSITIF DE VISÉE ET PROCÉDÉ DE VISUALISATION D'UN CHAMP DE VISION

(43) Veröffentlichungstag der Anmeldung: 04.10.2023
(73) Patentinhaber: SICK AG, 79183 Waldkirch (DE)
(72) Erfinder: Menzel, Christoph, 79211 Denzlingen (DE); Bleicher, Katharina, 79312 Emmendingen (DE)

(56) Entgegenhaltungen:
- EP-A1- 3 205 972
- DE-A1-102005 040 056
- DE-A1-102015 115 016
- US-A1- 2006 000 911

## Beschreibung

Die Erfindung betrifft einen optoelektronischen Sensor, insbesondere eine Kamera, mit einer Zieleinrichtung und ein Verfahren zum Visualisieren des Sichtfeldes eines optoelektronischen Sensors nach dem Oberbegriff von Anspruch 1 beziehungsweise 14.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine besondere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine Kamera nimmt ihre Bilder aus einem Sichtfeld auf. Für eine korrekte Funktion ist erforderlich, das Sichtfeld innerhalb der Anwendungsumgebung auszurichten. Beispielsweise müssen sich zu erfassende Objekte oder lesende Codes im Sichtfeld befinden. Es ist bekannt, die Kamera dafür mit einer Einrichthilfe oder Zieleinrichtung auszustatten, die das Sichtfeld mit einem Fadenkreuz oder einer ähnlichen lokalisierbaren Leuchtmarkierung sichtbar machen.

In einer herkömmlichen Zieleinrichtung sind Lichtquellen rechts und links des Empfangspfades angeordnet, die mit zwei Spots den mittig dazwischenliegenden Mittelpunkt des Sichtfeldes markieren. Eine zentrale Anordnung einer Lichtquelle ist nicht möglich, weil dort die Lichtquelle einen Teil des Empfangspfades abschatten und somit sprichwörtlich im Bild stehen würde. Der somit bislang erforderliche Einsatz von mehreren Zielstrahlen aus unterschiedlichen Lichtquellen erfordert zusätzliche Bauteile und den entsprechenden Bauraum. Außerdem wird durch das Schielen der Zielstrahlen die Visualisierung des Zentrums des Sichtfelds insbesondere über unterschiedliche Entfernungen hinweg erschwert. Unter Verwendung von Mikrolinsenfeldern oder diffraktiven optischen Elementen ist es möglich, aufwändigere Muster in das Sichtfeld zu projizieren. Die EP 2 620 894 B1 beispielsweise beschreibt einen optoelektronischen Sensor mit einer Zieleinrichtung, deren Mustererzeugungselement ein Mikrolinsenfeld mit einer Vielzahl von Mikrozylinderlinsen aufweist. Auch solche Mustererzeuger müssen samt der Lichtquellen Raum finden und entsprechend angeleuchtet werden, so dass sich die baulichen und optischen Probleme dadurch nicht auflösen.

Die DE 20 2015 100 438 U1 offenbart einen optoelektronischen Sensor mit einer Zieleinrichtung, die ein Array von Einzellichtquellen aufweist, die einzeln oder gruppenweise aktiviert werden können, wobei das Aktivierungsmuster dem projizierten Lichtmuster entspricht. Damit lassen sich zwar sehr variabel Lichtmuster erzeugen, der apparative Aufwand wird aber nur vergrößert und ein Schielen nicht verhindert.

Aus der EP 2 136 248 A1 ist eine Kamera zur Identifikation von Objekten mit einer Objektbeleuchtung und/oder Positionierbeleuchtung bekannt, wobei die Beleuchtung an eine Fokusverstellung gekoppelt ist. Dabei wird das oben erläuterte Konzept mit zwei seitlichen Lichtquellen auf einen Ring von Lichtquellen erweitert und die Lösung damit noch komplexer.

Seit einiger Zeit werden sogenannte Metalinsen eingesetzt. Das sind sind extrem dünne optische Elemente mit Linseneffekt, die spezielle Nanostrukturen aufweisen, um Strahlwege zu beeinflussen. Beispielsweise nutzt die WO 2017/053309 A1 eine Metalinse zum Kollimieren. Die Arbeit von Yu, Nanfang, und Federico Capasso, "Flat optics with designer metasurfaces." Nature materials 13.2 (2014): 139-150 befasst sich ebenfalls mit dieser Technologie. In der Arbeit von Reshef, Orad, et al. "An optic to replace space and its application towards ultra-thin imaging systems", Nature communications 12.1 (2021): 1-8 werden neben Metalinsen noch sogenannten Spaceplates diskutiert, wobei letztere mit den Metalinsen ähnlichen Technologien auf den Bereich zwischen den Linsen zielen, denn auch mehrere Metalinsen müssen zunächst wie klassische Linsen einen Abstand zueinander einhalten. Diesen Abstand sollen die Spaceplates verringern, um die Bautiefe einer Optik weiter reduzieren zu können. In den bisher vorgeschlagenen Anwendungen werden Metalinsen als Ersatz für klassische, refraktive Linsen verwendet.

Die noch unveröffentlichte deutsche Patentanmeldung mit dem Aktenzeichen 102021130334.6 vereinigt mittels eines optischen Elements mit wenigstens einer optischen Metaoberfläche einen sichtbaren Pilotlichtstrahl mit einem infraroten Messlichtstrahl. Dadurch kann der Verlauf des Messlichtstrahls mit dem bloßen Auge verfolgt werden. Eine Anwendung als Zieleinrichtung zur Visualisierung des Sichtfeldes einer Kamera ist dort aber nicht angedacht.

Es ist daher Aufgabe der Erfindung, die Zieleinrichtung eines optoelektronischen Sensors zum Sichtbarmachen von dessen Sichtfeld zu verbessern.

Diese Aufgabe wird durch einen optoelektronischen Sensor mit einer Zieleinrichtung und ein Verfahren zum Visualisieren des Sichtfeldes eines optoelektronischen Sensors nach Anspruch 1 beziehungsweise 14 gelöst. Ein Bildsensor nimmt in seinem Sichtbereich oder Sichtfeld Bilder auf und erfasst entsprechend Bilddaten. Dem Bildsensor ist vorzugsweise eine Empfangsoptik beziehungsweise ein Objektiv vorgeordnet, und gemeinsam bildet dies einen Empfangspfad. Eine Zieleinrichtung mit einer Lichtquelle im sichtbaren Spektrum, beispielsweise einer LED oder einem Laser, erzeugt Ausrichtlicht und damit ein Lichtmuster in dem Sichtfeld, so dass das Sichtfeld für das menschliche Auge erkennbar wird. Um die Position und/oder Ausdehnung des Sichtfeldes sichtbar zu machen, können beispielsweise ein Zentrum, insbesondere mit einem Fadenkreuz, und/oder Grenzlinien oder Ecken markiert werden. Die Lichtquelle ist zu dem Bildsensor lateral, d.h. in dessen Ebene, versetzt angeordnet. Dieser Versatz verhindert, dass die Lichtquelle einen relevanten Teil des Empfangspfades abschattet beziehungsweise in den Bilddaten erfasst wird. Dabei kann die Lichtquelle je nach Ausführungsform in der Ebene des Bildsensors angeordnet sein oder dazu senkrecht, somit in Sichtrichtung der Kamera, einen Abstand aufweisen.

Die Erfindung geht von dem Grundgedanken aus, ein optisches Metaelement zu verwenden, um die optischen Achsen des Bildsensors und der Zieleinrichtung koaxial zu überlagern. Die optische Achse des Bildsensors ist diejenige des Empfangspfades und einer dort vorzugsweise vorgesehenen Empfangsoptik. Die optische Achse der Zieleinrichtung entspricht deren Abstrahlrichtung in das Sichtfeld hinein. Die Funktion des optischen Metaelements ist somit, den Empfangspfad und die Projektionsachse der Zieleinrichtung koaxial zueinander auszurichten, anders ausgedrückt übereinander zu legen oder in eins zusammenfallen zu lassen. Aufgrund des seitlichen Versatzes der Lichtquelle zu dem Bildsensor ist das anfangs nicht gegeben und wird erst durch das optische Metaelement erreicht.

Unter einem optischen Metaelement ist ein optisches Element zu verstehen, das eine Metaoberfläche und/oder ein Metamaterial aufweist, d.h. Nanostrukturen insbesondere kleiner als die Wellenlänge des einfallenden Lichts, die ganz gezielt bestimmte Wellenfronten formen. Bei einer Metaoberfläche sind solche Nanostrukturen an der Oberfläche vorgesehen, ein Metamaterial erreicht entsprechende Eigenschaften durch die Nanostruktur eines Schichtsystems oder eines Vollkörpers. Die Nanostrukturen erlauben es, Phase und/oder Amplitude und damit die Ausbreitungsrichtung sowie die Polarisation definiert zu verändern, und dies insbesondere abhängig von der Wellenläge des einfallenden Lichts. Metaoberflächen werden auch als "flache Optiken" bezeichnet, da ihr Platzbedarf in Strahlrichtung deutlich geringer ist als derjenige konventioneller, refraktiver Optiken. Vorzugsweise bildet das optische Metaelement eine Metalinse, d.h. ein flaches, lichtdurchlässiges Trägermaterial mit einer Metaoberfläche an der Vorder- und/oder Rückseite mit einer Nanostruktur, die gewünschte Linseneigenschaften erzielt. Eine Metalinse kann statt eines einfachen Trägermaterials ein Metamaterial aufweisen. Optische Metaelemente sind an sich aus der Fachliteratur bekannt. Einleitend wurden beispielhaft die WO 2017/053309 A1 sowie die Arbeiten von Yu et al. sowie Reshef et al. kurz vorgestellt, auf die ergänzend verwiesen wird.

Die Erfindung hat den Vorteil, dass das Ausrichtlicht denselben Lichtweg nehmen kann wie das von dem Bildsensor ausgewertete Empfangslicht, natürlich in umgekehrter Richtung. Deshalb treten keine nachteiligen Effekte durch ein Schielen oder dergleichen auf, das Lichtmuster findet sich treu an der richtigen Stelle entsprechend dem Sichtfeld im realen Raum. Insbesondere wird ohne Schwierigkeit der richtige Mittelpunkt des Sichtfelds visualisiert, wobei je nach Anforderungen zusätzlich oder alternativ zur weiteren Unterstützung des Einrichters ebenso das Sichtfeld samt Geometrie und Ausdehnung angezeigt werden kann. Es ist möglich, auf zwei oder mehr Lichtquellen beidseits des Bildsensors zu verzichten und dadurch Bauteile sowie Bauraum einzusparen, der insbesondere bei miniaturisierten Sensoren knapp bemessen ist.

Vorzugsweise weist der Sensor nur eine Lichtquelle auf. Dank des optischen Metaelements, das die optischen Achsen von Bildsensor und Zieleinrichtung koaxial überlagert, kann trotz der zunächst seitlichen Einstrahlung der zu dem Bildsensor lateral versetzt angeordneten Lichtquelle das Sichtfeld samt dessen Mitte korrekt visualisiert werden. Im Stand der Technik war hierfür eine zur optischen Achse des Bildsensors symmetrische Anordnung mehrerer Lichtquellen erforderlich, wobei nicht einmal damit ein Schielen verhindert werden konnte. Die Erfindung hingegen kann mit einer einzigen Lichtquelle auskommen und projiziert das Lichtmuster dennoch genau in Richtung des Sichtfelds. Alternativ weist der Sensor vorzugsweise mehrere Lichtquellen auf, die eine nicht-symmetrische Anordnung um die optische Achse des Bildsensors bilden. Ein Beispiel hierfür ist eine Doppellichtquelle auf derselben Seite des Bildsensors für mehr Lichtstärke oder ein lateral zum Bildsensor versetzt angeordnetes Lichtquellenarray. Natürlich ist prinzipiell denkbar, auch die Erfindung mit einer symmetrischen Anordnung mehrerer Lichtquellen um die optische Achse des Bildsensors zu kombinieren, aber dann werden die Möglichkeiten des erfindungsgemäß eingesetzten optischen Metaelements nur zum Teil ausgeschöpft.

Die Lichtquelle weist bevorzugt eine Abstrahlrichtung schräg zu der optischen Achse des Bildsensors auf. Die schräge Abstrahlrichtung führt das Ausrichtlicht vorzugsweise in die optische Achse des Bildsensors. Dort wird es dann durch das optische Metaelement in die Richtung der optischen Achse des Bildsensors umgelenkt, und so werden die optischen Achsen von Bildsensor und Zieleinrichtungen einander koaxial überlagert. Die schräge Abstrahlrichtung korrigiert also gleichsam den lateralen Versatz der Lichtquelle zum Bildsensor.

In einer bevorzugten Alternative weist die Lichtquelle eine Abstrahlrichtung parallel zu der optischen Achse des Bildsensors auf, wobei ein optisches Element im Strahlengang der Lichtquelle zur Veränderung der Abstrahlrichtung in eine schräge Ausrichtung angeordnet ist. In dieser Ausführungsform weist das Ausrichtlicht anfänglich einen Parallelversatz zur optischen Achse des Bildsensors auf. Das optische Element lenkt das Ausrichtlicht dann in eine schräge Abstrahlrichtung um und führt es vorzugsweise in die optische Achse des Bildsensors. Die Kombination einer parallel zur optischen Achse des Bildsensors abstrahlenden Lichtquelle mit dem optischen Element entspricht funktional einer Lichtquelle mit schräger Abstrahlrichtung wie im Vorabsatz. Die Alternative kann bauliche Vorteile haben, beispielsweise kann es einfacher sein, die internen Lichtwege durch den Sensor zu führen oder eine Lichtquelle auf einer Platine parallel zu der Ebene des Bildsensors mit dazu senkrechter Abstrahlrichtung unterzubringen statt die Lichtquelle schräg anzuordnen. Als optisches Element kommen ein Spiegel, ein Prisma und jegliches sonstige optische Element in Betracht, das ein Lichtbündel umlenken kann. Das optische Element ist im Strahlengang des zunächst parallel zur optischen Achse des Bildsensors ausgesandten Ausrichtlichts angeordnet und damit zum Empfangspfad lateral versetzt, so dass keine Rücksicht auf eine etwaige Beeinflussung von Empfangslicht genommen werden muss.

Das optische Element ist bevorzugt ein weiteres optisches Metaelement. In dieser Ausführungsform gibt es zwei optische Metaelemente, wobei das weitere optische Metaelement die Umlenkfunktion übernimmt, die im vorigen Absatz beschrieben ist. Diesem nachgeordnet, der Abstrahlrichtung des Ausrichtlichts folgend, ist das erläuterte erfindungsgemäße optische Metaelement, das die optischen Achsen des Bildsensors und der Zieleinrichtung koaxial vereinigt.

Das optische Element ist bevorzugt dafür ausgebildet, das Ausrichtlicht zu bündeln oder zu kollimieren. Damit erhält das optische Element eine Doppelfunktion der Umlenkung in die schräge Abstrahlrichtung und der Strahlformung des Ausrichtlichts. In einer Ausführungsform als weiteres optisches Metaelement können sowohl die strahlumlenkenden als auch die strahlformenden Eigenschaften durch geeignete Nanostrukturen realisiert werden. Die Strahlformung sorgt dafür, dass das Ausrichtlicht bei der koaxialen Vereinigung der optischen Achsen von Bildsensor und Zieleinrichtung die Strahleigenschaften aufweist, für die das koaxial überlagernde optische Metaelement ausgelegt ist. Es wird dann keine Lichtquelle mit besonderer Abstrahlcharakteristik beziehungsweise keine gesonderte Sendeoptik für die Lichtquelle benötigt, wobei dies natürlich alternativ oder ergänzend denkbar wäre.

Das optische Metaelement ist bevorzugt dafür ausgebildet, das Lichtmuster zu erzeugen. Neben seiner Funktion der koaxialen Vereinigung wirkt das optische Metaelement somit auch als Mustererzeugungselement. Dadurch lassen sich komplexere Lichtmuster gestalten, wie eine Umrandung des Sichtfelds oder ein Fadenkreuz, und dem Einrichter damit zusätzliche Informationen über Orientierung, Geometrie, Ausdehnung und dergleichen des Sichtfelds geben. Das optische Metaelement kann ebenfalls eine Strahlformungswirkung aufweisen, so dass das Lichtmuster in einem möglichst großen Abstandsbereich scharf projiziert wird. Alternativ ist es denkbar, die Funktionen der Umlenkung beziehungsweise koaxialen Vereinigung und der Mustererzeugung zu trennen und ein zusätzliches Mustererzeugungselement vorzusehen, wie ein diffraktives optisches Element oder ein zusätzliches optisches Metaelement, oder die Lichtquellen sind bereits in einem geeigneten Muster angeordnet, etwa fünf Lichtquellen im Kreuz.

Dem Bildsensor ist bevorzugt eine Empfangsoptik vorgeordnet, wobei in dieser Reihenfolge Bildsensor, Empfangsoptik und optisches Metaelement hintereinander angeordnet sind. Die koaxiale Zusammenführung der optischen Achsen des Bildsensors und der Zieleinrichtung erfolgt somit aus Sicht des Ausrichtlichts erst hinter der Empfangsoptik. Das Ausrichtlicht umgeht demnach die Empfangsoptik und bleibt davon unbeeinflusst. Die für diese Ausführungsform festgelegte Reihenfolge schließt nicht aus, dass es weitere optische Elemente zwischen Bildsensor und Empfangsoptik oder zwischen Empfangsoptik und optischem Metaelement gibt.

Das optische Metaelement ist bevorzugt an einer Frontscheibe des Sensors angeordnet, insbesondere in die Frontscheibe integriert. Das ist ein besonders platzsparender Aufbau. Beispielsweise kann eine optische Metaoberfläche innen oder auch außen an der Frontscheibe aufgebracht werden, oder die Frontscheibe besteht zumindest partiell aus einem optischen Metamaterial.

Dem Bildsensor ist bevorzugt eine Empfangsoptik vorgeordnet, wobei das optische Metaelement zwischen Bildsensor und Empfangsoptik angeordnet ist. In dieser alternativen Ausführungsform ist die Reihenfolge von optischem Metaelement und Empfangsoptik nun vertauscht. Die optischen Achsen des Bildsensors und der Zieleinrichtung werden aus Sicht des Ausrichtlichts bereits vor der Empfangsoptik vereinigt. Das Ausrichtlicht durchdringt die Empfangsoptik, die somit für dessen Strahlformung, insbesondere Bündelung oder Kollimierung, ausgenutzt werden kann. Dadurch kann auf zusätzliche strahlformende optische Elemente der Zieleinrichtung für das Ausrichtlicht verzichtet werden.

Das optische Metaelement weist bevorzugt eine optische Wirkung nur im Spektrum der Lichtquelle auf, insbesondere nur im sichtbaren Spektrum oder nur für eine Farbe der Lichtquelle. Somit wird gezielt nur das Ausrichtlicht abgelenkt beziehungsweise strahlgeformt oder damit ein Lichtmuster geformt. Licht mit Wellenlängen außerhalb des Spektrums der Lichtquelle hingegen, und damit alles oder jedenfalls das meiste Empfangslicht, wird einfach unverändert durchgelassen. Dies ist nur in den Grenzen des technisch Machbaren möglich, aber eine Metaoberfläche oder ein Metamaterial kann durchaus so ausgelegt werden, dass die Wirkung außerhalb eines bestimmten Spektralbandes vernachlässigbar bleibt. Das Spektrum der Lichtquelle, innerhalb dessen das optische Metaelement eine optische Wirkung zeigt, kann das ganze sichtbare Spektrum sein. Das genügt für die Abgrenzung zwischen Ausrichtlicht und Empfangslicht, wenn die Bilddaten im nicht sichtbaren Bereich gewonnen werden, etwa Aufnahmen im infraroten oder ultravioletten Bereich erfolgen. Besonders bevorzugt erzeugt die Lichtquelle Ausrichtlicht in nur einer Farbe, etwa in blau, dies vorzugsweise kombiniert mit dem gewinnen von Bilddaten in einer anderen Farbe, etwa in rot. In diesem Zusammenhang darf Farbe insbesondere auch im Sinne des besonders schmalen Wellenlängenbereichs einer Laserlichtquelle verstanden werden. Sofern es Überschneidungen im Spektrum der Zieleinrichtung und des Bildsensors gibt, bleibt durch ein enges Wirkspektrum des optischen Metaelements die Wechselwirkung klein und hinnehmbar. Das Empfangslicht wird nur wenig beeinflusst, die Bilddaten sind allenfalls geringfügig verändert.

Der Sensor weist bevorzugt eine Beleuchtungseinrichtung zum Ausleuchten des Sichtfeldes auf, die insbesondere Beleuchtungslicht in einem anderen Spektralbereich erzeugt als das Ausrichtlicht der Lichtquelle. Diese Beleuchtungseinrichtung dient nicht der Visualisierung des Sichtfelds, sondern der ausreichenden Beleuchtung für die Bildaufnahme. Die Beleuchtungseinrichtung kann intern oder extern sein, und vorzugsweise wird Beleuchtungslicht außerhalb des sichtbaren Spektrums erzeugt, insbesondere infrarotes oder ultraviolettes Beleuchtungslicht. Durch eine spektrale Trennung zwischen Beleuchtungslicht und Ausrichtlicht kann das optische Metaelement seine verschiedenen Funktionen erfüllen, nämlich das Ausrichtlicht koaxial mit dem Empfangspfad vereinigen und Beleuchtungslicht beziehungsweise entsprechendes zurückkehrendes Empfangslicht möglichst gar nicht beeinflussen.

Der Sensor ist bevorzugt als kamerabasierter Codeleser ausgebildet und weist eine Steuer- und Auswertungseinheit zur Auswertung der Bilddaten, zum Auffinden von Codebereichen und zum Auslesen von Codeinformationen aus den Codebereichen auf. Die Zieleinrichtung ermöglicht für einen kamerabasierten Codeleser, dessen Lesefeld optimal auszurichten. Dies ist sowohl für Codeleser im Handbetrieb wie auch für Codeleser in fixer Montage etwa an einem Förderband oder in einem Lesetunnel wichtig, um möglichst alle Codes zu lesen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit einem Bildsensor und einer Zieleinrichtung, deren optische Achsen mittels eines optischen Metaelements koaxial überlagert werden;
- Fig. 2: eine Darstellung ähnlich Figur 1 nun mit Anordnung des optischen Metaelements an einer Frontscheibe;
- Fig. 3: eine Darstellung ähnlich Figur 2 nun mit anfänglich paralleler statt schräger Abstrahlrichtung der Zieleinrichtung;
- Fig. 4: eine Darstellung ähnlich Figur 1 nun mit vertauschter Reihenfolge von Empfangsoptik und optischem Metaelement;
- Fig. 5: eine Darstellung ähnlich Figur 4 nun mit anfänglich paralleler statt schräger Abstrahlrichtung der Zieleinrichtung;
- Fig. 6: eine beispielhafte Visualisierung eines Sichtfelds durch Markierung des Zentrums;
- Fig. 7: eine beispielhafte Visualisierung eines Sichtfelds durch Markierung des Zentrums mit einem Fadenkreuz;
- Fig. 8: eine beispielhafte Visualisierung eines Sichtfelds durch Markierung der Eckbereiche; und
- Fig. 9: eine beispielhafte Visualisierung eines Sichtfelds durch Markierung des Zentrums und der Eckbereiche.

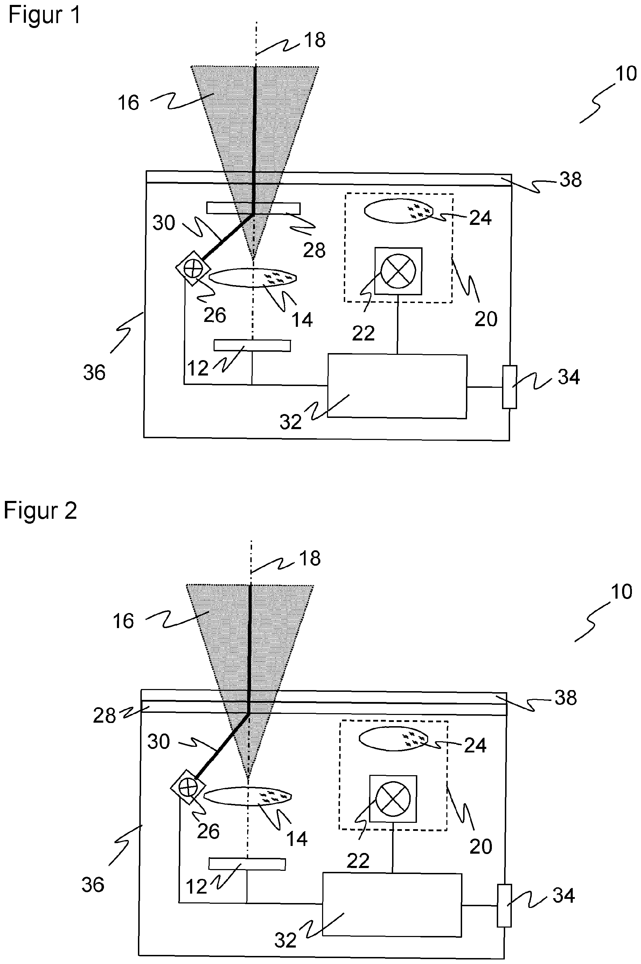

Figur 1 zeigt eine schematische Schnittdarstellung eines optoelektronischen Sensors 10. Der Sensor 10 weist einen Bildsensor 12 auf, beispielsweise einen CCD- oder CMOS-Chip mit einer Vielzahl von zu einer Zeile oder einer Matrix angeordneten Pixelelementen. Somit handelt es sich bei dem Sensor 10 insbesondere um eine Kamera. In einer bevorzugten Ausführungsform werden Codes gelesen, der Sensor 10 ist dann ein kamerabasierter Codeleser. Dem Bildsensor 12 ist eine Empfangsoptik 14 vorgeordnet, die in der Praxis vorzugsweise als Aufnahmeobjektiv ausgebildet ist und hier vereinfacht durch nur eine Linse dargestellt ist. Der Bildsensor 12 empfängt über die Empfangsoptik 14 Empfangslicht aus einem Sichtbereich oder Sichtfeld 16, in dem sich in der Anwendungssituation die aufzunehmenden Objekte und insbesondere zu lesende Codes befinden. Das Sichtfeld 16 sowie eine optische Achse 18 des Empfangspfades werden durch die Auslegung und Anordnung von Bildsensor 12 und Empfangsoptik 14 definiert. Etwas ungenau wird in dieser Beschreibung häufig von Sichtfeld 16 und optischer Achse 18 des Bildsensors 12 gesprochen.

Um Bilder unabhängig von Umgebungsbedingungen aufzunehmen, weist der Sensor 10 vorzugsweise eine Beleuchtung 20 mit einem Lichtsender 22, der eine Vielzahl von Einzellichtsendern aufweisen kann, und vorzugsweise einer Sendeoptik 24 auf. Die Beleuchtung 20 kann wie dargestellt intern und alternativ extern vorgesehen sein, ihre Ausgestaltung ist in jeder an sich bekannten Weise möglich. Die Anordnung der Beleuchtung 20 bezüglich des Empfangspfades mit dem Bildsensor 12 wie in Figur 1 ist denkbar, jedoch in erster Linie schematisch zu verstehen, in der Praxis werden beispielsweise Lichtsender 22 kreisförmig um den Empfangspfad angeordnet. Vorzugsweise erzeugt der Lichtsender 22 Beleuchtungslicht im nicht sichtbaren Spektrum, insbesondere infrarotes oder ultraviolettes Beleuchtungslicht. Eine Beleuchtung im sichtbaren Spektrum, wie weißes, rotes, blaues oder grünes Licht ist aber nicht ausgeschlossen. Der Lichtsender kann überdies schmalbandig sein, wie im Falle einer LED oder vor allem eines Lasers.

Der Sensor 10 umfasst weiterhin eine Zieleinrichtung mit einer Lichtquelle 26, etwa einer Halbleiterlichtquelle wie eine LED, eine Laserdiode oder ein VCSEL im sichtbaren Spektrum, und einem optischen Metaelement 28. Die Lichtquelle 26 ist zu dem Bildsensor 12 lateral versetzt angeordnet, weist also einen Abstand zu der optischen Achse 18 des Bildsensors 12 auf. Die Lichtquelle 26 kann auch wie dargestellt einen Abstand in Richtung der optischen Achse 18 aufweisen, oder sie befindet sich abweichend in der Ebene des Bildsensors 12. In einer bevorzugten Ausführungsform genügt eine einzige Lichtquelle 26, es sind aber auch mehrere Lichtquellen 26 denkbar. Diese sind dann vorzugsweise in einer nicht-symmetrischen Weise zu dem Bildsensor 12 angeordnet, das Ausrichtlicht 30 ist somit anfänglich bezüglich der optischen Achse 18 nicht zentriert.

Die Lichtquelle 26 strahlt ihr Ausrichtlicht 30 zunächst bezüglich der optischen Achse 18 mit einer schrägen Abstrahlrichtung ab. Das Ausrichtlicht 30 trifft aufgrund der Schrägstellung auf die optische Achse 18 und hier auf das optische Metaelement 28. Das optische Metaelement 28 ist so ausgelegt, dass es im Spektrum des Ausrichtlichts 30 für eine Umlenkung auf die optische Achse 18 sorgt. Die Abstrahlrichtung wird also mit der optischen Achse 18 und damit der Einfallsrichtung des Empfangslichts ausgerichtet. Anders ausgedrückt werden die optische Achse der Zieleinrichtung und die optische Achse 18 des Bildsensors 12 beziehungsweise des Empfangspfades koaxial überlagert oder vereinigt.

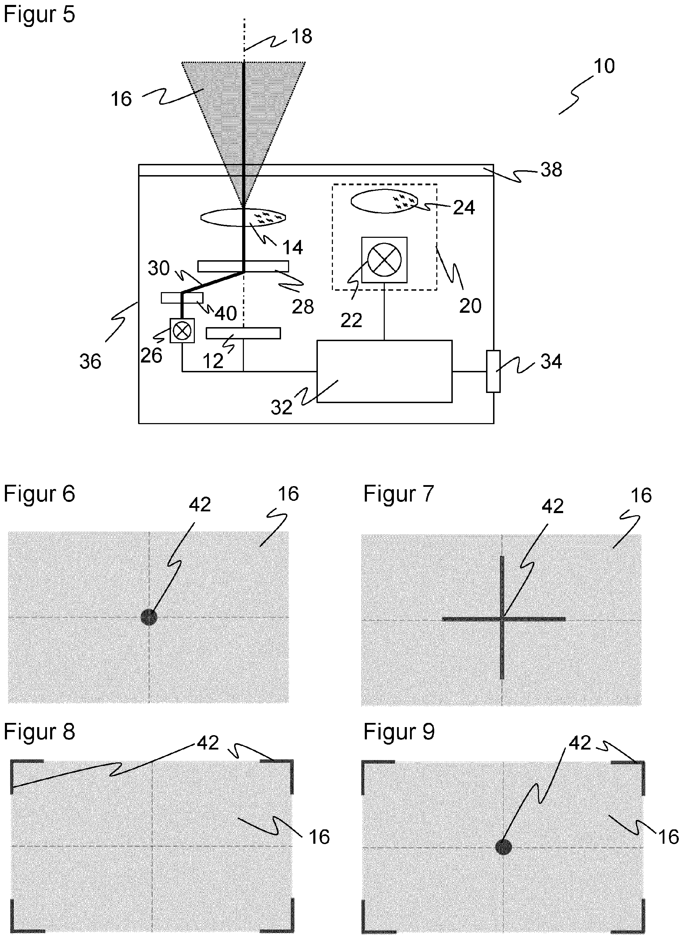

Mit der Zieleinrichtung wird in dem Sichtfeld 16 mit dem Ausrichtlicht 30 ein Lichtmuster erzeugt, das einem menschlichen Betrachter wie dem Einrichter des Sensors 10 die Lage des Sichtfelds 16 anzeigt oder im realen Raum visualisiert. Somit kann der Sensor einfach auf eine Szenerie beziehungsweise aufzunehmende Objekte oder Codes ausgerichtet werden. Dank der koaxialen Überlagerung von Zieleinrichtung und Empfangspfad zeigt das Lichtmuster den richtigen Bezug zum Sichtfeld 16 im realen Raum an. Das Lichtmuster kann einfach oder komplex sein, später werden unter Bezugnahme auf die Figuren 6 bis 9 Beispiele erläutert. Das optische Metaelement 28 kann neben seiner Umlenkfunktion für die Mustererzeugung ausgebildet sein, oder es ist dafür ein gesondertes, nicht gezeigtes Mustererzeugungselement zuständig, oder das Lichtmuster besteht nur aus einem oder wenigen Lichtspots, die unmittelbar von der Lichtquelle 26 erzeugt werden.

Das optische Metaelement 28 weist eine Metaoberfläche auf und ist insbesondere als Metalinse aufgebaut ("flat optics"). Alternativ oder ergänzend ist denkbar, dass bereits der Körper oder Träger des optischen Metaelements 28 ein Metamaterial aufweist. Herkömmliche optische Komponenten wie Linsen, Wellenplatten oder Hologramme beruhen auf der Lichtausbreitung über Entfernungen, die viel größer als die Wellenlänge des einfallenden Lichts sind, um Wellenfronten zu formen. Auf diese Weise werden entlang des Strahlengangs nach und nach wesentliche Änderungen der Amplitude, Phase oder Polarisation von Lichtwellen akkumuliert. Eine Metaoberfläche hingegen weist Strukturen auf, die als Miniatur-Anisotrop-Lichtstreuer oder Resonatoren beziehungsweise optische Antennen aufgefasst werden können. Diese Strukturen haben Abmessungen und Abstände im Nanometerbereich, viel kleiner als die Wellenlänge des einfallenden Lichts. Dadurch formt die Metaoberfläche nach dem Huygens-Prinzip optische Wellenfronten in beliebige Formen mit Subwellenlängenauflösung, indem die Nanostrukturen räumliche Variationen in der optischen Reaktion der Lichtstreuer einführen. Damit lassen sich Effekte einer herkömmlichen Linse nachempfinden, aber auch Funktionalitäten von anderen optischen Komponenten, wie beispielsweise von Strahlumlenkelementen, Strahlteilern, Polarisatoren oder Beugungsgittern. Die Besonderheit ist die hohe Flexibilität, durch angepasste Nanostrukturen eine gewünschte Ausgangswellenfront und damit verschiedenste optische Effekte zu erreichen. Je nach Wellenlängenbereich werden Materialien mit einem geeigneten Transmissionsverhalten verwendet, beispielsweise Titandioxid, Siliziumnitrid oder Galliumphosphid im sichtbaren und Aluminiumnitrid im ultravioletten Spektralbereich sowie Chalkogenid-Legierungen im mittleren und Silizium im langwelligen Infrarotbereich. Diese Überlegungen zu einer Metaoberfläche lassen sich auf ein Metamaterial übertragen, bei dem das Innere beziehungsweise der Träger entsprechende Nanostrukturen aufweist, wobei dies mit einer Metaoberfläche kombinierbar ist. Das optische Metaelement 28 kann folglich eine Meta- oder Nanostruktur im Inneren und/oder auf der Vorder- und/oder Rückseite aufweisen. Für an sich bekannte Eigenschaften eines optischen Metaelements 28 wird nochmals auf die Fachliteratur und insbesondere die einleitend genannte WO 2017/053309 A1 sowie die Arbeiten von Yu et al. und Reshef et al. verwiesen.

Erfindungsgemäß ist die gewünschte Funktion des optischen Metaelements 28 in erster Linie eine Umlenkung zur koaxialen Überlagerung von Zieleinrichtung und Empfangspfad, gegebenenfalls mit einer zusätzlichen Mustererzeugung und/oder Strahlformung, Bündelung oder Kollimierung. Vorzugsweise wirkt das optische Metaelement gezielt nur im Spektrum der Lichtquelle 26 und damit nur auf das Ausrichtlicht 30, nicht aber auf das Beleuchtungslicht des Lichtsenders 22 der Beleuchtung 20 beziehungsweise das Empfangslicht. Das optische Metaelement 28 ist damit im Empfangspfad praktisch unsichtbar. Eine spektrale Trennung ist beispielsweise dann möglich, wenn der Bildsensor 12 im nicht sichtbaren Spektrum aufnimmt, dementsprechend die Beleuchtung 20 beispielsweise infrarotes oder ultraviolettes Beleuchtungslicht erzeugt. Auch eine Trennung im sichtbaren Bereich ist vorstellbar, beispielsweise blaues Ausrichtlicht 30 bei rotem Beleuchtungslicht beziehungsweise roter Bildaufnahme.

Sofern sich eine spektrale Überlagerung nicht vermeiden lässt, ist es vorteilhaft, eine besonders schmalbandige Lichtquelle 26 einzusetzen, insbesondere eine Laserlichtquelle, und das optische Metaelement 28 darauf abzustimmen. Das Empfangslicht wird dann nur minimal beeinflusst, und ferner ist denkbar, vor dem Bildsensor 12 ein entsprechendes optisches Filter anzuordnen, mit dem Licht im Spektrum des Ausrichtlichts 30 herausgefiltert wird. Damit werden auch Kombinationen mit eng zusammenliegenden Wellenlängen möglich. Beispielsweise kann die Beleuchtung 20 eine weiße LED oder eine nahinfrarote Lichtquelle als Lichtsender 22 einsetzen, und die Zieleinrichtung eine rote Lichtquelle 26, insbesondere einen entsprechenden Laser. Da die Zieleinrichtung in der Regel mit ausgeschalteter Beleuchtung 20 betrieben wird, ist die Sichtbarkeit des Lichtmusters unproblematisch. Selbst bei eingeschalteter Beleuchtung 20 kann sich das Lichtmuster bei ausreichender Beleuchtungsstärke der Lichtquelle 26 in deren Spektrum ausreichend abheben.

Der Sensor 10 weist weiterhin eine Steuer- und Auswertungseinheit 32 auf. Damit werden die Beleuchtung 20 und die Lichtquelle 26 der Zieleinrichtung angesteuert und die Bilddaten des Bildsensors 12 ausgelesen. In einer Ausführungsform des Sensors 10 als kamerabasierter Codeleser werden in den Bilddaten Codebereiche gesucht, und die Codeinformationen innerhalb von Codebereichen werden dekodiert. Bilddaten, Ergebnisse einer Auswertung wie Codeinformationen und dergleichen werden an einer Schnittstelle 34 bereitgestellt. Es können Bilddaten in unterschiedlichen Vorverarbeitungsstadien ausgegeben und die gesamte Auswertung oder ein Teil der Auswertung nach extern verlagert werden.

Der Sensor 10 wird durch ein Gehäuse 36 geschützt, das in vielen Ausführungsformen an einer Seite mindestens partiell durch eine transparente Frontscheibe 38 abgeschlossen wird.

Die Figuren 2 bis 5 zeigen weitere Ausführungsformen der Erfindung, die sich von der zu Figur 1 beschriebenen Ausführungsform durch ihre Einkoppelszenarien unterscheiden, also die jeweilige Anordnung und Auslegung der Lichtquelle 26 und des optischen Metaelements 28, um das Ausrichtlicht 30 auf die optische Achse 18 zu führen und damit die koaxiale Überlagerung der optischen Achse 18 des Empfangspfads und der optischen Achse der Zieleinrichtung zu erreichen. Es werden im Folgenden in erster Linie die Unterschiede beschrieben und dabei die bereits bekannten Merkmale und Eigenschaften mit denselben Bezugszeichen versehen.

Figur 2 zeigt eine Ausführungsform, in der die Einkopplung des Ausrichtlichts 30 auf die optische Achse 18 an der Frontscheibe 38 erfolgt. Dazu ist das optische Metaelement 28 innen oder außen an der Frontscheibe 38 angeordnet oder in die Frontscheibe 38 integriert. Die Abstrahlrichtung der Lichtquelle 26 und insbesondere deren Schrägstellung ist entsprechend angepasst, um auf die veränderte Position des optischen Metaelements 28 zu zielen. Die Kombination von optischem Metaelement 28 und Frontscheibe 38 verringert die Anzahl der Bauteile und beansprucht weniger Bauraum.

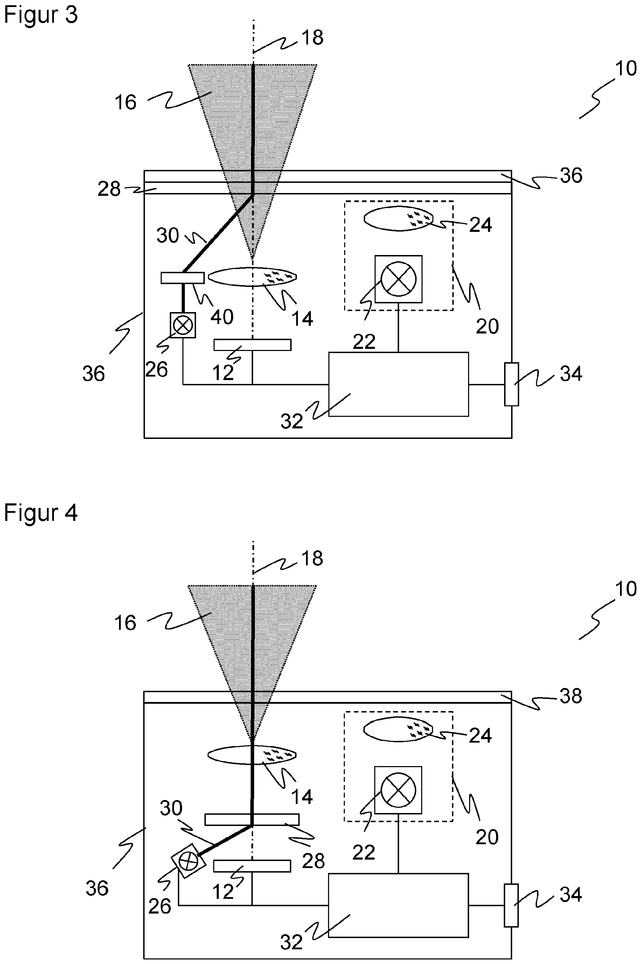

Figur 3 zeigt eine Ausführungsform, in der weiterhin das optische Metaelement 28 zur koaxialen Überlagerung des Ausrichtlichts 30 auf die optische Achse 18 an der Frontscheibe 38 angeordnet oder in die Frontscheibe 38 integriert ist. Zudem ist nun die Abstrahlrichtung der Lichtquelle 26 nicht mehr schräg, sondern parallel zur optischen Achse 18. Um das Ausrichtlicht 30 auf Höhe des optischen Metaelements 28 auf die optische Achse 18 zu führen, ist ein weiteres optisches Element 40 zur Umlenkung vorgesehen. Die Kombination der parallel ausgerichteten Lichtquelle 26 mit dem weiteren optischen Element 40 bewirkt somit effektiv die gleiche Abstrahlrichtung wie ein zuvor beschriebenes Schrägstellen der Lichtquelle 26.

Das weitere optische Element 40 kann irgendein Umlenkelement sein, wie ein Spiegel oder ein Prisma. Das weitere optische Element 40 liegt wegen des lateralen Versatzes der Lichtquelle 26 zum Bildsensor 12 außerhalb des Sichtfelds 16, so dass besondere Eigenschaften hinsichtlich der Transparenz im Spektrum der Beleuchtung 20 beziehungsweise des Empfangslichts nicht gefordert sind. Bevorzugt handelt es sich bei dem weiteren optischen Element 40 um ein weiteres optisches Metaelement, das im Spektrum des Ausrichtlichts 30 für die gewünschte Umlenkung sorgt. Besonders bevorzugt ist das weitere optische Element 40 für eine Strahlformung des Ausrichtlichts 30 ausgebildet, insbesondere zu dessen Kollimierung. In einer Ausführungsform als weiteres optisches Metaelement kann von dessen Nanostrukturen neben einer linearen Phase zur Strahlumlenkung gleichzeitig eine auf die gewünschten Abbildungseigenschaften angepasste Phasenkrümmung erzeugt werden. Bei einer derartigen Doppelfunktion des weiteren optischen Elements 40 kann eine divergente Lichtquelle 26 eingesetzt beziehungsweise auf eine gesonderte Strahlformungs- oder Kollimationsoptik für die Lichtquelle 26 verzichtet werden. Abweichend von Figur 3 könnte das optische Metaelement 28 wie in Figur 1 einzeln statt an der Frontscheibe 38 vorgesehen sein.

Figur 4 zeigt eine Ausführungsform, in der die Positionen von Empfangsoptik 14 und optischem Metaelement 28 gegenüber den bisherigen Ausführungsformen vertauscht sind. Während das Ausrichtlicht 30 bisher die Empfangsoptik 14 umgangen hat, tritt es in der Ausführungsform gemäß Figur 4 durch die Empfangsoptik 14. Somit kann die Empfangsoptik 14 von der Zieleinrichtung mit genutzt werden, um das Ausrichtlicht 30 strahlzuformen oder zu kollimieren. Das optische Metaelement 28 kann die strahlformenden Eigenschaften der Empfangsoptik 14 für das Ausrichtlicht 30 ergänzen, also neben einer reinen Umlenkung durch eine lineare Phase eine passende Phasenkrümmung einführen. In einerweiteren Ausführungsform wird das optische Metaelement28 in die Empfangsoptik 28 integriert, beispielsweise als Metaoberfläche einer Linse. In der Ausführungsform gemäß Figur 4 ist die Lichtquelle 26 wie in den Figuren 1 und 2 unter einem Winkel angeordnet oder schräg gestellt, um auf das optische Metaelement 28 zu zielen, wo dann das Ausrichtlicht 30 koaxial mit der optischen Achse 18 überlagert wird, ehe es die Empfangsoptik 14 erreicht.

Figur 5 zeigt eine Ausführungsform ähnlich Figur 4, also mit koaxialer Überlagerung bereits vor der Empfangsoptik 14, wobei nun die Lichtquelle 26 nicht mehr schräg steht, sondern wie in Figur 3 parallel zu der optischen Achse 18 abstrahlt. Wie zu Figur 3 erläutert, ist ein weiteres optisches Element 40 vorgesehen, das das Ausrichtlicht 30 auf das optische Metaelement 28 umlenkt. Das weitere optische Element 40 ist vorzugsweise ein weiteres optisches Metaelement.

Die Figuren 6 bis 9 zeigen einige beispielhafte Lichtmuster 42, die von der Zieleinrichtung mit der Lichtquelle 26 und dem optischen Metaelement 28 erzeugt werden können. In Figur 6 ist eine sehr einfache Visualisierung illustriert, in der ein Punkt oder Spot als Lichtmuster 42 in das Zentrum des Sichtfelds 16 projiziert wird. Dadurch ist das Zentrum des Sichtfelds 16 markiert und damit eine besonders wichtige Ausrichthilfe gegeben.

In Figur 7 wird dem Ausrichtlicht 30 zur Markierung des Zentrums eine zusätzliche Strukturierung mitgegeben, vorzugsweise durch das optische Metaelement 28 selbst, alternativ durch ein zusätzliches Musterelement oder eine entsprechende Anordnung von Lichtquellen 26. Besonders hilfreich ist ein Fadenkreuz als Lichtmuster 42, mit dem das Zentrum und die Hauptrichtungen des Sichtfelds 16 leicht erkennbar werden. Anstelle eines Fadenkreuzes kann ein beliebiges anderes Muster projiziert werden.

In Figur 8 wird durch das Lichtmuster 42 die Geometrie und Ausdehnung des Sichtfeldes 16 insgesamt visualisiert. Es ist dann kein Bild des Bildsensors 12 erforderlich, um das Sichtfeld 16 beziehungsweise den Sensor 10 insgesamt korrekt auszurichten. Das Lichtmuster 42 und dessen Darstellung des Sichtfeldes 16 skaliert dank der koaxialen Überlagerung korrekt mit dem Abbildungsmaßstab der Empfangsoptik 14 über den gesamten Abstandsbereich des Sensors 10. Für diese größentreue Darstellung des Sichtfelds 16 kann die Empfangsoptik 14 mitgenutzt werden wie zu den Figuren 4 und 5 erläutert, alternativ kann das optische Metaelement 28 verwendet werden, um das Lichtmuster 42 in der richtigen Größe zu projizieren. Die Außengrenzen des Sichtfeldes 16 werden in Figur 8 durch Eckmarkierungen angezeigt, auch hier sind beliebige andere Muster denkbar.

Figur 9 illustriert eine Kombination, in der sowohl wie in Figur 6 das Zentrum des Sichtfeldes 16 markiert als auch wie in Figur 8 dessen Ausdehnung visualisiert wird. Die einzelnen Musterelemente können anders gestaltet werden, beispielsweise jeweils als Fadenkreuz, und überhaupt abweichend beliebige Muster erzeugt werden, die wichtige Eigenschaften des Sichtfelds 16 sichtbar machen.

## Patentansprüche

1. Optoelektronischer Sensor (10), insbesondere Kamera, der einen Bildsensor (12) zur Erfassung von Bilddaten in seinem Sichtfeld (16) und eine Zieleinrichtung (26, 28) mit einer Lichtquelle (26) aufweist, die seitlich versetzt zu dem Bildsensor (12) angeordnet und dafür ausgebildet ist, Ausrichtlicht (30) und damit ein Lichtmuster (42) in dem Sichtfeld (16) zu erzeugen, um die Position und/oder Ausdehnung des Sichtfeldes (16) im Raum sichtbar zu machen, **dadurch gekennzeichnet,**
**dass** die Zieleinrichtung (26, 28) mindestens ein optisches Metaelement (28) mit einer Metaoberfläche und/oder einem Metamaterial aufweist, das derart angeordnet und ausgebildet ist, dass die optischen Achsen (18, 30) von Bildsensor (12) und Zieleinrichtung (26, 28) koaxial überlagert werden.

2. Sensor (10) nach Anspruch 1,
der nur eine Lichtquelle (26) aufweist oder der mehrere Lichtquellen (26) aufweist, die eine nicht-symmetrische Anordnung um die optische Achse (18) des Bildsensors (12) bilden.

3. Sensor (10) nach Anspruch 1 oder 2,
wobei die Lichtquelle (26) eine Abstrahlrichtung schräg zu der optischen Achse (18) des Bildsensors (12) aufweist.

4. Sensor (10) nach Anspruch 1 oder 2,
wobei die Lichtquelle (26) eine Abstrahlrichtung parallel zu der optischen Achse (18) des Bildsensors (12) aufweist, und wobei ein optisches Element (40) im Strahlengang der Lichtquelle (26) zur Veränderung der Abstrahlrichtung in eine schräge Ausrichtung angeordnet ist.

5. Sensor (10) nach Anspruch 4,
wobei das optische Element (40) ein weiteres optisches Metaelement ist.

6. Sensor (10) nach Anspruch 4 oder 5,
wobei das optische Element (40) dafür ausgebildet ist, das Ausrichtlicht (30) zu bündeln oder kollimieren.

7. Sensor (10) nach einem der vorhergehenden Ansprüche,
wobei das optische Metaelement (28) dafür ausgebildet ist, das Lichtmuster (42) zu erzeugen.

8. Sensor (10) nach einem der vorhergehenden Ansprüche,
wobei dem Bildsensor (12) eine Empfangsoptik (14) vorgeordnet ist, und wobei in dieser Reihenfolge Bildsensor (12), Empfangsoptik (14) und optisches Meta-element (28) hintereinander angeordnet sind.

9. Sensor (10) nach einem der vorhergehenden Ansprüche,
wobei das optische Metaelement (28) an einer Frontscheibe (38) des Sensors (10) angeordnet, insbesondere in die Frontscheibe (38) integriert ist.

10. Sensor (10) nach einem der Ansprüche 1 bis 7,
wobei dem Bildsensor (12) eine Empfangsoptik (14) vorgeordnet ist, und wobei das optische Metaelement (28) zwischen Bildsensor (12) und Empfangsoptik (18) angeordnet ist.

11. Sensor (10) nach einem der vorhergehenden Ansprüche,
wobei das optische Metaelement (28) eine optische Wirkung nur im Spektrum der Lichtquelle (26) aufweist, insbesondere nur im sichtbaren Spektrum oder nur für eine Farbe der Lichtquelle (26).

12. Sensor (10) nach einem der vorhergehenden Ansprüche,
der eine Beleuchtungseinrichtung (20) zum Ausleuchten des Sichtfeldes (16) aufweist, die insbesondere Beleuchtungslicht in einem anderen Spektralbereich erzeugt als das Ausrichtlicht (30) der Lichtquelle (26).

13. Sensor (10) nach einem der vorhergehenden Ansprüche,
der als kamerabasierter Codeleser ausgebildet ist und eine Steuer- und Auswertungseinheit (32) zur Auswertung der Bilddaten, zum Auffinden von Codebereichen und zum Auslesen von Codeinformationen aus den Codebereichen aufweist.

14. Verfahren zum Visualisieren des Sichtfeldes (16) eines optoelektronischen Sensors (10), insbesondere eines optoelektronischen Sensors (10) nach einem der vorhergehenden Ansprüche, der mit einem Bildsensor (12) Bilddaten aus dem Sichtfeld (16) erfasst und mittels einer Zieleinrichtung (26, 28) mit einer seitlich versetzt zu dem Bildsensor (12) angeordneten Lichtquelle (26) Ausrichtlicht (30) abstrahlt und damit ein Lichtmuster (42) in dem Sichtfeld (16) erzeugt, um die Position und/oder Ausdehnung des Sichtfeldes (16) im Raum sichtbar zu machen,
**dadurch gekennzeichnet,**
**dass** die Zieleinrichtung (26, 28) mindestens ein optisches Metaelement (28) mit einer Metaoberfläche und/oder einem Metamaterial aufweist, das die optischen Achsen (18, 30) von Bildsensor (12) und Zieleinrichtung (26, 28) koaxial überlagert.

## Claims

1. An optoelectronic sensor (10), in particular a camera, comprising an image sensor (12) for detecting image data in its field of view (16) and comprising a sighting device (26, 28) having a light source (26) that is arranged laterally offset from the image sensor (12) and is configured to generate alignment light (30) and thus a light pattern (42) in the field of view (16) in order to make the position and/or extent of the field of view (16) visible in space,
**characterized in that** the sighting device (26, 28) comprises at least one optical meta-element (28) having a meta-surface and/or a meta-material, which is arranged and configured such that the optical axes (18, 30) of the image sensor (12) and the sighting device (26, 28) are coaxially superimposed.

2. The sensor (10) according to claim 1,
which comprises only one light source (26) or which comprises a plurality of light sources (26) that form a non-symmetrical arrangement around the optical axis (18) of the image sensor (12).

3. The sensor (10) according to claim 1 or 2,
wherein the light source (26) comprises a transmission direction oblique to the optical axis (18) of the image sensor (12).

4. The sensor (10) according to claim 1 or 2,
wherein the light source (26) comprises a transmission direction parallel to the optical axis (18) of the image sensor (12), and wherein an optical element (40) is arranged in the beam path of the light source (26) for changing the transmission direction to an oblique orientation.

5. The sensor (10) according to claim 4,
wherein the optical element (40) is an additional optical meta-element.

6. The sensor (10) according to claim 4 or 5,
wherein the optical element (40) is configured to focus or collimate the alignment light (30).

7. The sensor (10) according to any of the preceding claims,
wherein the optical meta-element (28) is configured to generate the light pattern (42).

8. The sensor (10) according to any of the preceding claims,
wherein a receiving optics (14) is arranged in front of the image sensor (12), and wherein image sensor (12), receiving optics (14) and optical meta-element (28) are arranged one after the other in this order.

9. The sensor (10) according to any of the preceding claims,
wherein the optical meta-element (28) is arranged on a front window (38) of the sensor (10), in particular is integrated into the front window (38).

10. The sensor (10) according to any of claims 1 to 7,
wherein a receiving optics (14) is arranged in front of the image sensor (12), and wherein the optical meta-element (28) is arranged between the image sensor (12) and the receiving optics (18).

11. The sensor (10) according to any of the preceding claims,
wherein the optical meta-element (28) has an optical effect only in the spectrum of the light source (26), in particular only in the visible spectrum or only for one color of the light source (26).

12. The sensor (10) according to any of the preceding claims,
which has an illumination device (20) for illuminating the field of view (16), which in particular generates illumination light in a different spectral range than the alignment light (30) of the light source (26).

13. The sensor (10) according to any of the preceding claims,
which is configured as a camera-based code reader and comprises a control and evaluation unit (32) for evaluating the image data, for locating code areas and for reading out code information from the code areas.

14. A method for visualizing the field of view (16) of an optoelectronic sensor (10), in particular an optoelectronic sensor (10) according to any of the preceding claims, which sensor (10) captures image data from the field of view (16) using an image sensor (12) and transmits alignment light (30) by means of a sighting device (26, 28) having a light source (26) arranged laterally offset to the image sensor (12) and thus generates a light pattern (42) in the field of view (16) in order to make the position and/or extent of the field of view (16) visible in space, **characterized in that** the sighting device (26, 28) comprises at least one optical meta-element (28) having a meta-surface and/or a meta-material which coaxially overlaps the optical axes (18, 30) of the image sensor (12) and the sighting device (26, 28).

## Revendications

1. Capteur optoélectronique (10), en particulier une caméra, comprenant un capteur d'images (12) pour détecter des données d'image dans son champ de vision (16) et un dispositif de visée (26, 28) avec une source lumineuse (26) qui est disposée de manière décalée latéralement par rapport au capteur d'images (12) et qui est configurée pour générer une lumière d'alignement (30) et ainsi un modèle lumineux (42) dans le champ de vision (16) afin de rendre visible la position et/ou l'extension du champ de vision (16) dans l'espace,
**caractérisé en ce que**
le dispositif de visée (26, 28) comprend au moins un méta-élément optique (28) avec une méta-surface et/ou un méta-matériau, qui est disposé et configuré de telle sorte que les axes optiques (18, 30) du capteur d'images (12) et du dispositif de visée (26, 28) soient superposés coaxialement.

2. Capteur (10) selon la revendication 1,
qui comprend une seule source lumineuse (26) ou qui comprend plusieurs sources lumineuses (26) qui forment une disposition non symétrique autour de l'axe optique (18) du capteur d'images (12).

3. Capteur (10) selon la revendication 1 ou 2,
dans lequel la source de lumière (26) comprend une direction de rayonnement oblique par rapport à l'axe optique (18) du capteur d'images (12).

4. Capteur (10) selon la revendication 1 ou 2,
dans lequel la source de lumière (26) comprend une direction de rayonnement parallèle à l'axe optique (18) du capteur d'images (12), et dans lequel un élément optique (40) est disposé dans le trajet du faisceau de la source de lumière (26) pour modifier la direction de rayonnement en une orientation oblique.

5. Capteur (10) selon la revendication 4,
dans lequel l'élément optique (40) est un méta-élément optique supplémentaire.

6. Capteur (10) selon la revendication 4 ou 5,
dans lequel l'élément optique (40) est configuré pour mutualiser ou collimater la lumière d'alignement (30).

7. Capteur (10) selon l'une des revendications précédentes,
dans lequel le méta-élément optique (28) est configuré pour générer le modèle lumineux (42).

8. Capteur (10) selon l'une des revendications précédentes,
dans lequel une optique de réception (14) est disposée en amont du capteur d'images (12), et dans lequel le capteur d'images (12), l'optique de réception (14) et le méta-élément optique (28) sont disposés l'un après l'autre dans cet ordre.

9. Capteur (10) selon l'une des revendications précédentes,
dans lequel le méta-élément optique (28) est disposé sur une vitre frontale (38) du capteur (10), en particulier est intégré dans la vitre frontale (38).

10. Capteur (10) selon l'une des revendications 1 à 7,
dans lequel une optique de réception (14) est disposée en amont du capteur d'images (12), et dans lequel le méta-élément optique (28) est disposé entre le capteur d'images (12) et l'optique de réception (18).

11. Capteur (10) selon l'une des revendications précédentes,
dans lequel le méta-élément optique (28) comporte un effet optique uniquement dans le spectre de la source lumineuse (26), en particulier uniquement dans le spectre visible ou uniquement pour une couleur de la source lumineuse (26).

12. Capteur (10) selon l'une des revendications précédentes,
qui comporte un dispositif d'éclairage (20) pour éclairer le champ de vision (16), qui génère en particulier une lumière d'éclairage dans une gamme spectrale différente de la lumière d'alignement (30) de la source lumineuse (26).

13. Capteur (10) selon l'une des revendications précédentes,
qui est configuré comme un lecteur de code basé sur une caméra et qui comprend une unité de commande et d'évaluation (32) pour évaluer les données d'image, pour localiser les zones de code et pour lire des informations de code à partir des zones de code.

14. Procédé de visualisation du champ de vision (16) d'un capteur optoélectronique (10), en particulier d'un capteur optoélectronique (10) selon l'une des revendications précédentes, qui saisit des données d'image du champ de vision (16) avec un capteur d'images (12) et qui émet une lumière d'alignement (30) au moyen d'un dispositif de visée (26, 28) avec une source lumineuse (26) qui est disposée de manière décalée latéralement par rapport au capteur d'images (12) et génère ainsi un modèle lumineux (42) dans le champ de vision (16) afin de rendre visible la position et/ou l'extension du champ de vision (16) dans l'espace,
**caractérisé en ce que**
le dispositif de visée (26, 28) comprend au moins un méta-élément optique (28) avec une méta-surface et/ou un méta-matériau qui superpose coaxialement les axes optiques (18, 30) du capteur d'images (12) et du dispositif de visée (26, 28).
